# EUROPÄISCHE PATENTANMELDUNG

(11) **EP 4 835 403 A1**
(43) Veröffentlichungstag der Anmeldung: **04.11.2026**
(21) Anmeldenummer: 25173823.3
(22) Anmeldetag: 30.04.2025
(51) Int. Cl.: G01B 21/16, F16L 1/06, G01B 21/24

(54) **VORRICHTUNG ZUM MESSEN EINER LAGEÄNDERUNG VON MITEINANDER VERBUNDENEN ROHREN ODER ROHRSTÜCKEN**

(71) Anmelder: VonRoll infratec (holding) ag, 6300 Zug (CH)
(72) Erfinder: MATTERN, René, 4106 Therwil (CH); CESEN, Simon Peter, 5012 Schönenwerd (CH)
(74) Vertreter: Troesch Scheidegger Werner AG

(57) **Zusammenfassung**

Die Erfindung betrifft eine Vorrichtung (100) zum Messen einer Lageänderung eines ersten Rohres oder Rohrstücks (1) gegenüber einem mit diesem über eine Muffe (2) verbundenen zweiten Rohr oder Rohrstück (3). Die erfindungsgemässe Vorrichtung weist auf:
- zumindest zwei Befestigungsmittel (110, 120), von denen ein erstes Befestigungsmittel (110) an dem ersten Rohr oder Rohrstück (1) oder an der Muffe (2) befestigbar ist und ein zweites Befestigungsmittel (120) an dem zweiten Rohr oder Rohrstück (3) oder an der Muffe (2) befestigbar ist,
- eine Messeinrichtung (140), die ausgebildet ist, einen axialen Abstand, eine axiale Verschiebung, einen Winkel und/oder eine Winkeländerung des ersten Befestigungsmittels (110) bezüglich dem zweiten Befestigungsmittel (120) zu messen und ein entsprechendes Ausgangsignal zu erzeugen, wobei die Messeinrichtung an dem ersten Befestigungsmittel (110) und dem zweiten Befestigungsmittel (120) angeordnet ist.

## Beschreibung

### TECHNISCES GEBIET DER ERFINDUNG

Die Erfindung betrifft eine Vorrichtung zum Messen einer Lageänderung eines ersten Rohres oder Rohrstücks gegenüber einem mit diesem über eine Muffe verbundenen zweiten Rohr oder Rohrstück.

### BESCHREIBUNG DES STANDES DER TECHNIK

In vielen Gebieten bewegt sich der Untergrund aufgrund der geologischen Verhältnisse entweder durchaus regelmässig oder innerhalb einer längeren Zeit immer mal wieder. Bei den geologischen Verhältnissen, unter denen dieser Effekt auftritt, kann es sich beispielsweise um das Aufeinandertreffen von tektonischen Platten und den sich daraus ergebenden Erdbeben oder um Erdrutschneigung in Hanglagen handeln. Ein Untergrund kann zudem im Laufe der Zeit durch natürliche Prozesse, etwa durch Unterspülung, instabil werden. Auch kann sich ein Untergrund als instabil erweisen, wenn dieser zu stark durch Bebauung belastet wird. Darüber hinaus kann eine durch menschliche Tätigkeit herbeigeführte Veränderung des Untergrunds zu einer Bewegung des Untergrunds führen, beispielsweise bei Bergsenkungen in bergbaulich genutzten Gebieten.

Soweit sich in diesen Gebieten Siedlungen, insbesondere dichtbesiedelte Städte, befinden, ist deren Leitungsinfrastruktur für Trink- und Abwasser stark gefährdet. Die bei einer Bewegung des Untergrunds auftretenden Belastungen einer Rohrleitung und deren Verbindungen können kaum zuverlässig abgeschätzt werden und die Belastungen können so gross werden, dass eine konstruktive Massnahme, welche den Bruch oder die Undichtheit der Rohrleitung verhindert, ohnehin nicht zur Verfügung steht. Jedoch stehen Muffen zur Verbindung von Rohren bzw. Rohrstücken zur Verfügung, welche eine Abwinkelung zweier hintereinander angeordneter Rohre erlauben, ohne dass die Rohrleitung undicht wird. Diesbezüglich haben sich die Rohre und Rohrverbindungen des Herstellers "Duktus - VonRoll Hydro" besonders bewährt, weil diese eine Abwinkelung von bis zu 24 Grad zulassen, ohne dass die Rohrleitung undicht wird. Bei einem 6 Meter langen Rohr entspricht dies einer lateralen Auslenkung von rund 2,5 m. Die Rohrleitungen selbst sind aus duktilem Gusseisen gefertigt und gegebenenfalls mit einer Schutzschicht versehen, um einer Beschädigung der Rohrleitungen durch chemische Reaktionen besonders in aggressiven Böden vorzubeugen. Duktiles Gusseisen hat sich für Rohrleitungen besonders bewährt, weil es im Gegensatz zu dem ursprünglich verwendeten Grauguss unter Last verformbar ist. Duktiles Gusseisen ist wie Grauguss ein Eisen-Kohlenstoff-Werkstoff, wobei jedoch der Kohlenstoff in Form kleiner Kugeln in das Eisengefüge eingebunden ist, anstatt wie bei Gusseisen in Form von Lamellengrafit, sodass Spannungsspitzen (hohe Dichte von Spannungslinien) im Bereich der Ecken und Kanten des Lamellengrafits vermieden werden.

Obwohl mit solchen Rohrverbindungssystemen eine gewisse Belastbarkeit einer Rohrleitung bezüglich einer Bewegung des Untergrundes sichergestellt werden kann, hat der Betreiber eines Rohrnetzes keinen Einblick darin, welche Belastungen bereits aufgetreten sind und dementsprechend nicht, ob eine Annäherung an die Belastungsgrenze bereits aufgetreten ist (eine bereits aufgetretene Undichtheit als Folge einer Belastung oberhalb der Belastungsgrenze sollte sich durch einen Druckabfall bemerkbar machen). Darüber hinaus kündigt sich eine grössere Bewegung eines Untergrundes zumeist durch vorangehende kleinere Bewegungen an, sodass eine Kenntnis kleinerer Bewegungen zum Anlass genommen werden könnte, Vorkehrungen für den Fall einer grösseren Bewegung des Untergrundes zu treffen.

Die Überwachung des Untergrundes kann natürlich durch ein von der Rohrleitung separates Netzwerk von Sensoren erfolgen, wie dies etwa in Erdbebengebieten bereits geschieht, jedoch ist die Installation und Wartung sowie Auswertung der Messergebnisse mit zusätzlichen Kosten verbunden und inwieweit eine Rohrleitung von einer Bewegung des Untergrundes konkret betroffen ist, kann von solchen Messergebnissen nur rückgeschlossen werden, soweit dies überhaupt möglich ist.

Vor diesem Hintergrund ist es Aufgabe der vorliegenden Erfindung, eine Vorrichtung bereit zu stellen, mit welcher eine Überwachung einer Rohrleitung hinsichtlich einer Lageänderung benachbarter Rohre bzw. Rohrstücke erfolgen kann.

### OFFENBARUNG DER ERFINGUNG

Zur Lösung dieser Aufgabe ist eine Vorrichtung mit den Merkmalen des Anspruches 1 vorgesehen. Weitere Ausgestaltungen der erfindungsgemässen Vorrichtung sind Gegenstand der abhängigen Ansprüche 2 bis 8. Die Erfindung betrifft ferner ein Rohrverbindungssystem mit der erfindungsgemässen Vorrichtung sowie eine Verwendung der Vorrichtung oder des Rohrverbindungssystems zur Überwachung einer Rohrleitung und schliesslich ebenfalls ein Verfahren zur Leitungsüberwachung.

Demnach weist die erfindungsgemässe Vorrichtung zum Messen einer Lageänderung eines ersten Rohres oder Rohrstücks gegenüber einem mit diesem über eine Muffe verbundenen zweiten Rohr oder Rohrstück auf:
- zumindest zwei Befestigungsmittel, von denen ein erstes Befestigungsmittel an dem ersten Rohr oder Rohrstück oder an der Muffe befestigbar ist und ein zweites Befestigungsmittel an dem zweiten Rohr oder Rohrstück oder an der Muffe befestigbar ist,
- eine Messeinrichtung, die ausgebildet ist, einen axialen Abstand, eine axiale Verschiebung, einen Winkel und/oder eine Winkeländerung des ersten Befestigungsmittels bezüglich dem zweiten Befestigungsmittel zu messen und ein entsprechendes Ausgangsignal zu erzeugen, wobei die Messeinrichtung an dem ersten Befestigungsmittel und dem zweiten Befestigungsmittel angeordnet ist.

Die Befestigungsmittel dienen zur Festlegung der Vorrichtung an den benachbarten Rohren oder Rohstücken, welche über eine Muffe miteinander verbunden sind. Es ist auch möglich eines der Befestigungsmittel an einem Rohr oder Rohrstück festzulegen und das andere an einer Muffe, welche zwei Rohre oder Rohrstücke miteinander verbindet. In ersterem Falle wird die Lage zweier Rohre oder Rohrstücke zueinander überwacht und in letzterem Falle die Lage eines Rohres oder Rohrstückes gegenüber der Muffe, in welche das Rohr oder Rohrstück zur Herstellung einer Verbindung zu einem anderen Rohr oder Rohrstück eingesteckt ist. Die Befestigungsmittel sind derart an dem jeweiligen Rohr oder Rohrstück bzw. der Muffe befestigt, dass sie darauf nicht in Axialrichtung (des Rohres, Rohrstückes oder der Muffe) verrutschen, was zu einer Fehlmessung führte. Die Vorrichtung weist weiter eine Messeinrichtung auf, welche einen axialen Abstand, eine axiale Verschiebung, einen Winkel und/oder eine Winkeländerung des ersten Befestigungsmittels bezüglich dem zweiten Befestigungsmittel misst.

Demnach handelt sich bei den Rohren oder Rohrstücken sowie den zu ihrer Verbindung verwendeten Muffen um herkömmlicherweise zur Verlegung einer Rohrleitung verwendete Rohre, Rohrstücke und Muffen, welche mit der erfindungsgemässen Vorrichtung versehen werden, sodass eine spezielle Ausgestaltung derselben für die angestrebte Leitungsüberwachung nicht erforderlich ist und sich die Herstellungskosten dafür dementsprechend nicht erhöhen. Vielmehr kann eine Rohrleitung verlegt werden, wie es nach dem Stand der Technik bereits erfolgt, und einzelne, multiple oder sogar sämtliche Rohrverbindungen werden mit der erfindungsgemässen Vorrichtung ausgestattet, um eine Leitungsüberwachung zu ermöglichen.

Grundsätzlich können mit der erfindungsgemässen Vorrichtung der axiale Abstand zwischen zwei Rohren oder Rohrstücken oder zwischen einem Rohr oder Rohrstück und der daran angeordneten Muffe, eine axiale Verschiebung derselben, ein Winkel zwischen denselben und/oder eine Winkeländerung erfasst werden, sodass verschiedene Untergrundbewegungen detektiert werden können und sogar die Art der Untergrundbewegung kann erfasst werden, was einen Rückschluss auf die noch zu erwartende Untergrundbewegung zulassen kann. Je nach Art der zu detektierenden Lageänderung wird die Messeinrichtung unterschiedlich ausgestaltet sein. Jedoch können sowohl der Abstand, die axiale Verschiebungen als auch der Winkel und die Winkeländerung mit Hilfe von linear-beweglichen Sensoren erfasst werden, d.h. mit Sensoren, die gegeneinander linear bewegliche Komponenten aufweisen und das Messsignal mit der relativen Stellung der Komponenten zueinander korreliert. Unter einer axialen Verschiebung wird eine Verschiebung in Axialrichtung des Rohres, der Rohrstücks oder der Muffe verstanden, welche eine zylindrische Form aufweisen. Dementsprechend wird unter einer Radialrichtung eine Richtung verstanden, welche mit einer Tangente an die Umfangsfläche einen rechten Winkel einschliesst, was der üblichen Konvention bei zylindrischen Körpern entspricht.

Die erfindungsgemässe Vorrichtung hat den Vorteil, dass das Auftreten sowie das Ausmass und die Art der Untergrundbewegung detektiert werden können, bevor es zu einer Undichtheit kommt und dementsprechend Massnahmen oder Vorkehrungen betroffen werden können. Sollte sich der Untergrund im Laufe der Zeit nur geringfügig bewegen, kann es ausreichend sein, einzelne Rohrabschnitte neu zu verlegen, weil die weitere zu erwartende Untergrundbewegung erst nach langer Zeit zu der Gefahr einer Undichtheit führt. Anderenfalls können rechtzeitig die Planung und Verlegung einer anderen Rohrleitung beginnen. Dies ist bei Verwendung der erfindungsgemässen Vorrichtung möglich, ohne die Gestaltung der Rohre, Rohrstücke und Muffen zur Verwirklichung einer Rohrleitung selbst zu ändern. Die Nachrüstung einer bereits bestehenden Rohrleitung mit der erfindungsgemässen Vorrichtung ist dementsprechend ebenfalls möglich.

In bevorzugter Ausgestaltung umfasst die Vorrichtung ferner eine Begrenzungseinrichtung, über welche das erste Befestigungsmittel und das zweite Befestigungsmittel gegeneinander beweglich miteinander verbunden sind, wobei die Begrenzungseinrichtung ein Rückhalteelement, insbesondere in Form eines Anschlags, aufweist, um eine maximale Lageänderung des ersten Befestigungsmittels gegenüber dem zweiten Befestigungsmittel zu begrenzen. Eine Rohr-Muffen-Verbindung weist bei den Verbindungssystemen beispielsweise der Firma "Duktus - VonRoll Hydro" ein Spiel sowohl hinsichtlich einer axialen Verschiebung als auch einer Winkeländerung auf, was diese Verbindungssysteme bei der Verlegung einer Rohrleitung sowie der Lebensdauer besonders vorteilhaft macht. Dieses Spiel ist natürlich begrenzt, sodass eine Auslenkung über eine maximale Lageänderung hinaus zu einer mechanischen Beschädigung der beteiligten Komponenten und mithin zu einer Undichtheit der Rohrleitung führt. Mit der Begrenzungseinrichtung der erfindungsgemässen Vorrichtung kann sichergestellt werden, dass die maximale, von der Vorrichtung zu erfassende Lageänderung erreicht ist, bevor die maximale zulässige Auslenkung (axiale Verschiebung oder Abwinkelung) der Rohrverbindung erreicht ist, sodass eine Annäherung an die maximale zulässige Auslenkung der Rohrverbindung rechtzeitig detektiert wird.

In weiterer Ausgestaltung kann vorgesehen sein, dass das erste Befestigungsmittel und/oder das zweite Befestigungsmittel derart ausgebildet sind, dass sie das erste Rohr oder Rohrstück, das zweite Rohr oder Rohrstück oder die Muffe ringförmig umschliessen, insbesondere als Rohrklemmschelle ausgebildet sind. Natürlich können das erste und zweite Befestigungsmittel auch an den an der jeweiligen Rohrverbindung beteiligten Rohren, Rohrstücken oder der Muffe angeschweisst werden, jedoch erhöht sich dadurch der Aufwand und die benötigte Zeit zur Installation der Vorrichtung. Deshalb handelt es sich bei den Befestigungsmitteln bevorzugt um Rohrklemmschellen, welche um das jeweilige Rohr, Rohrstück oder die Muffe herumgelegt und daran befestigt werden, indem Komponenten des jeweiligen Befestigungsmittels aneinander befestigt werden, wobei es in bevorzugter Ausgestaltung zu einem Formschluss mit einer an der Oberfläche des Rohres oder Rohrstücks befindlichen Schweissraupe oder einer in der Oberfläche ausgebildeten Vertiefung kommen kann. Es ist auch möglich, dass an dem jeweiligen Rohr, Rohrstück oder der Muffe korrespondierende Befestigungselemente ausgebildet sind, beispielsweise in Form von Flanschen, an welchen die Befestigungsmittel der erfindungsgemässen Vorrichtung befestigbar sind, jedoch führt jede besondere Ausgestaltung der beteiligten Komponenten der Rohrverbindung im Hinblick auf die daran zu befestigende, erfindungsgemässe Vorrichtung zu höheren Kosten bei der Herstellung.

Bevorzugt weisen das erste Befestigungsmittel und das zweite Befestigungsmittel radiale Erstreckungen auf, an denen die Messeinrichtung und/oder die Begrenzungseinrichtung angeordnet ist. Solche (in Bezug auf die zylindrische Form des Rohrs, Rohrstücks oder der Muffe) radiale Erstreckungen sind besonders geeignet für die Anordnung der Messeinrichtung und/oder der Begrenzungseinrichtung, weil sich diese bei der axialen Verschiebung eines Rohres oder Rohrstücks bezüglich des benachbarten Rohres oder Rohrstücks oder bezüglich der Muffe (je nachdem wo die Befestigungsmittel angebracht sind) in dem gleichen Masse verschieben, denn sie befinden sich jeweils in einer Querschnittsebene des Rohres, Rohrstücks oder der Muffe. Dementsprechend kann mit deren Hilfe auch eine Begrenzung der maximalen axialen Verschiebung bewerkstelligt werden. Ferner kann mit Hilfe solcher radialer Erstreckungen zur Befestigung der Messeinrichtung auch eine Winkelstellung oder Winkeländerung mit linear-beweglichen Sensoren, insbesondere Linearpotentiometern, gemessen werden, in dem jeweils zwei solcher Sensoren in einer Ebene oder parallelen Ebenen, innerhalb derer die Winkelstellung bzw. Änderung derselben gemessen werden soll, angerordnet werden.

In besonders bevorzugter Ausgestaltung umfasst die Messeinrichtung ein oder mehrere Potentiometer, insbesondere Linearpotentiometer, mit gegeneinander verstellbaren Komponenten, wobei eine dieser Komponenten an dem ersten Befestigungsmittel und eine andere an dem zweiten Befestigungsmittel angeordnet ist. Die Anordnung eines Linearpotentiometers kann an zueinander korrespondierenden radialen Erstreckungen des ersten und zweiten Befestigungsmittels erfolgen. Linearpotentiometer können in zueinander senkrechten Ebenen angeordnet sein, sodass eine Winkelstellung bzw. Änderung der Winkelstellung dementsprechend in zueinander senkrechten Ebenen gemessen werden kann, beispielsweise in einer horizontalen Ebene, was einem seitlichen Abknicken der Rohrverbindung entspricht, und in einer vertikalen Ebene, was einem Abknicken der Rohrverbindung nach oben oder untern entspricht. Mit Hilfe der zuletzt genannten Ausgestaltung ist es möglich, nicht nur das Vorhandensein einer Untergrundbewegung zu erfassen, sondern auch die Art der Untergrundbewegung, was für die Klärung der Ursache der Untergrundbewegung sowie der Ergreifung von Massnahmen eine wichtige Information sein kann. Für die Erfassung einer Winkelstellung bzw. Änderung der Winkelstellung müssen Linearpotentiometer entsprechend schwenkbar an den Befestigungsmitteln angeordnet sein. Es ist insbesondere auch möglich, dass die Messeinrichtungen drei (oder mehr) Messvorrichtungen beispielsweise in Form von Linearpotentiometern umfasst, sodass neben einer axialen Verschiebung auch eine Abwinkelung sowohl in einer ersten Ebene, etwa der horizontalen Ebene, als auch in einer zweiten, dazu senkrechten Ebene, etwa der vertikalen Ebene detektiert werden können.

Die Messeinrichtung kann auch eine oder mehrere optische Messvorrichtungen umfassen, bei welcher eine Entfernung (über eine Laufzeit oder Interferenzmessung) mit Hilfe einer Lichtquelle und eines Lichtsensors gemessen wird, wobei auch eine Lichtumlenkung mit Hilfe eines oder mehrerer Spiegel zur Anwendung kommen kann. Des Weiteren kann die Messeinrichtung auch einen oder mehrere Dehnungsmessstreifen aufweisen.

Das Linearpotentiometer kann derart ausgebildet sein, dass es ineinander verschiebbare Komponenten aufweist, von denen eine als Schaft und die andere als den Schaft aufnehmende Hülse ausgebildet ist. Solche Linearpotentiometer weisen im Hinblick auf die in dem Untergrund wirkenden Kräfte eine gute Stabilität bei gleichzeitiger guter Messgenauigkeit auf.

Weiter kann vorgesehen sein, dass die Begrenzungseinrichtung ein oder mehrere, insbesondere zwei, Führungselemente umfasst, die gleitend mit zumindest dem ersten oder dem zweiten Befestigungsmittel verbunden sind, sodass eine Lageänderung des ersten Befestigungsmittels gegenüber dem zweiten Befestigungsmittel entlang der Führungselemente erfolgt. Diese Führungselemente dienen der Stabilisierung der Relativbewegung der Komponenten der erfindungsgemässen Vorrichtung, um Messfehler sowie eine Beschädigung der Messeinrichtung zu vermeiden.

Bevorzugt sind das eine oder die mehreren Führungselemente als Führungsstangen, insbesondere Gewindestangen, ausgebildet, welche sich durch die radialen Erstreckungen des ersten und/oder zweiten Befestigungsmittels hindurch erstrecken. Daneben können die Führungselemente als Schienenpaare ausgebildet sein. Eine Gewindestange hat jedoch den Vorteil, dass an ihr ein Anschlag durch Schrauben auf die Gewindestage leicht angeordnet werden kann und die Lage des Anschlags zudem leicht einstellbar ist. Mit Hilfe eine Gewindestange sowie einem Anschlag, wobei sich die Gewindestange durch eine radiale Erstreckung zumindest eines der Befestigungsmittel hindurch über eine in der radialen Erstreckung ausgebildete Ausnehmung geführt ist, kann eine Begrenzungseinrichtung realisiert werden, welche die maximale Lageänderung der an der Rohrverbindung beteiligten Komponenten (Rohre, Rohrstücke oder Muffe) begrenzt.

Ein weiterer Aspekt der Erfindung betrifft ein Rohrverbindungssystem, umfassend
- ein erstes Rohr oder Rohrstück,
- ein zweites Rohr oder Rohrstück,
- eine Muffe zur Verbindung des ersten Rohrs oder Rohrstücks und des zweiten Rohrs oder Rohrstücks sowie
- eine Vorrichtung in einer der Ausgestaltungen, wie sie zuvor beschrieben worden sind,

wobei das erste Rohr oder Rohrstück und/oder das zweite Rohr oder Rohrstück eine Schweissraupe aufweist, welche sich zumindest abschnittsweise entlang eines Umfangs erstreckt, oder an dem ersten Rohr oder Rohrstück und/oder dem zweiten Rohr oder Rohrstück ein Klemmring angeordnet ist,
wobei die Muffe mit einer Schweissraupe oder einem Klemmring an dem ersten und/oder zweiten Rohr oder Rohrstück zusammenwirkt, um einem Lösen des ersten Rohrs oder Rohrstücks von dem zweiten Rohr oder Rohrstück entgegenzuwirken,
und wobei das erste und/oder zweite Befestigungsmittel an einer Schweissraupe oder einem Klemmring angeordnet sind.

Bei dem erfindungsgemässen Rohrverbindungssystem erfolgt die Verbindung zweier Rohre oder Rohrstücke in der bekannten Weise über eine Muffe. Zur Verbindung der Rohre oder Rohrstücke mit der Muffe können diese jeweils in ihrem Endbereich eine Schweissraupe aufweisen. Alternativ kann ein Klemmring in dem Endbereich des jeweiligen Rohres oder Rohrstücks angeordnet sein. Sowohl eine Schweissraupe als auch ein Klemmring haben den Zweck, eine Erhebung der Umfangsfläche bereitzustellen, mit deren Hilfe das Rohr oder Rohrstück mit der Muffe über einen Formschluss verbunden werden kann. Ein solcher Formschluss lässt eine Relativbewegung zwischen dem jeweiligen Rohr oder Rohrstück und der Muffe in bestimmten Grenzen zu, und zwar sowohl eine axiale Verschiebung als auch ein Abwinkelung, ohne dass es zu einer Undichtheit kommt. Die Kombination einer solchen flexiblen Rohrverbindung mit einer erfindungsgemässen Vorrichtung ermöglicht es, dass die Lageänderung eines der an der Rohrverbindung beteiligten Rohre oder Rohrstücke bezüglich der Muffe oder des anderen an der Rohrverbindung beteiligten Rohres oder Rohrstücks gemessen werden kann. Auch eines der Befestigungsmittel der erfindungsgemässen Vorrichtung ist an einer Schweissraupe oder einem Klemmring angeordnet, sodass dieses Befestigungsmittel an seinem Platz verbleibt, wenn Kräfte wirken, welche das Rohr oder Rohrstück aus der Muffe ziehen.

In bevorzugter Ausgestaltung hintergreift die Muffe eine Schweissraupe oder einen Klemmring an dem ersten Rohr oder Rohrstück und/oder dem zweiten Rohr oder Rohrstück, wobei zwischen der Muffe und der Schweissraupe oder dem Klemmring zumindest ein Riegel angeordnet ist. Weiter sind bevorzugt zwischen der Muffe und einer Schweissraupe oder einem Klemmring ein oder mehrere sich in Umfangsrichtung erstreckende Riegel angeordnet. Die Herstellung einer Verbindung zwischen einem Rohr oder Rohrstück und einer Muffe in dieser Weise ist aus dem Stand der Technik bekannt, jedoch nicht ihre Kombination mit einer Vorrichtung zum Messen einer Lageänderung eines ersten Rohres oder Rohrstücks gegenüber einem mit diesem über eine Muffe verbundenen zweiten Rohr oder Rohrstück, wie sie zuvor beschrieben ist. Bezüglich der Verbindung zwischen einem Rohr oder Rohrstück und einer Muffe wird auf die Zeichnungen verwiesen.

In einem weiteren Aspekt betrifft die vorliegende Erfindung eine Verwendung einer erfindungsgemässen Vorrichtung, wie sie zuvor beschrieben worden ist, oder eines erfindungsgemässen Rohrverbindungssystems, wie es zuvor beschrieben worden ist, zur Überwachung einer Rohrleitung, insbesondere unterirdischen Rohrleitung.

Schliesslich betrifft die Erfindung ferner ein Verfahren zur Leitungsüberwachung, wobei eine Rohrleitung aus mehreren Rohren verlegt ist, insbesondere über einen Hang verlegt ist, an welcher zumindest eine erfindungsgemässe Vorrichtung, wie sie zuvor beschrieben worden ist, angeordnet ist oder die Verbindung zwischen zumindest zwei Rohren durch ein erfindungsgemässes Rohrverbindungssystem, wie es zuvor beschrieben worden ist, hergestellt ist, und wobei das Ausgangssignal der Messeinrichtung kontinuierlich oder intermittierend in einer Zeitreihe erfasst wird. Durch die Erstellung einer solchen Zeitreihe kann nicht nur das Ausmass der Lageänderung, sondern auch deren zeitlicher Verlauf erfasst werden, was für die Dringlichkeit oder Art der zu ergreifenden Massnahmen eine wichtige Information darstellen kann. Das Ausgangsignal kann ein analoges Strom- oder Spannungssignal oder ein digitales Signal sein, welches über Kabel oder kabellos übertragen wird.

### KURZE BESCHREIBUNG DER ZEICHNUNGEN

Fig. 1 zeigt eine perspektivische Ansicht eines ersten Ausführungsbeispiels der erfindungsgemässen Vorrichtung,
Fig. 2 zeigt eine Seitenansicht des ersten Ausführungsbeispiels der erfindungsgemässen Vorrichtung in einem ersten Zustand,
Fig.3 zeigt eine Seitenansicht des ersten Ausführungsbeispiels der erfindungsgemässen Vorrichtung in einem zweiten Zustand,
Fig. 4 zeigt eine teilweise geschnittene Seitenansicht des ersten Ausführungsbeispiels,
Fig. 5 zeigt eine schematische Ansicht eines zweiten Ausführungsbeispiels der erfindungsgemässen Vorrichtung in einem ersten Zustand,
Fig. 6 zeigt eine schematische Ansicht des zweiten Ausführungsbeispiels der erfindungsgemässen Vorrichtung in einem zweiten Zustand und
Fig. 7 zeigt eine schematische Ansicht des zweiten Ausführungsbeispiels der erfindungsgemässen Vorrichtung in einem dritten Zustand.

### DETAILLIERTE BESCHREIBUNG EINES BEVORZUGTEN AUSFÜHRUNGSBE ISPIELS

Im Folgenden wird die Erfindung anhand von bevorzugten Ausführungsbeispielen beschrieben. Die Erfindung ist jedoch nicht auf die in den Zeichnungen 1 bis 7 dargestellten Ausführungsformen beschränkt.

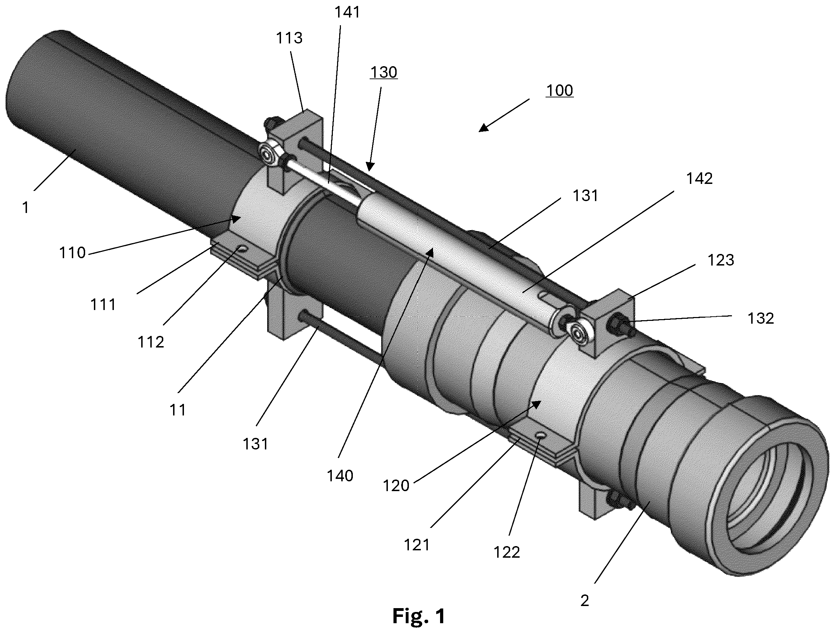

Fig. 1 zeigt ein Ausführungsbeispiel einer erfindungsgemässen Vorrichtung 100, die an der Verbindung zwischen einem Rohr 1 und einer Muffe 2 angeordnet ist. Die Vorrichtung 100 weist zwei Befestigungsmittel 110, 120 auf, die als ringförmige Rohrklemmschellen ausgebildet sind. Die Befestigungsmittel 110, 120 sind an korrespondierenden Stellen abgewinkelt, sodass in Radialrichtung verlaufende Vorsprünge 111, 121 vorhanden sind. Über diese Vorsprünge 111, 121 werden die beiden halbringförmigen Teilkomponenten des jeweiligen Befestigungsmittels 110, 120 aneinander befestigt, beispielsweise mittels Schrauben, welche durch Bohrungen 112, 122 geführt und sodann mittels Muttern arretiert sind. Durch die Befestigung der beiden halbringförmigen Teilkomponenten der Befestigungsmittel 110, 120 aneinander werden diese zugleich an dem Rohr 1 bzw. der Muffe 2 befestigt. Das Rohr 1 ist in der Muffe 2 in Axialrichtung verschiebbar. Das Befestigungsmittel 110 ist an einer Schweissraupe 11 des Rohres 1 angeordnet, um zusätzlich sicherzustellen, dass das Befestigungsmittel 110 an seiner Position verbleibt, wenn das Rohr 1 aufgrund der auf dieses einwirkenden Kräfte aus der Muffe 2 herausgezogen wird. Die vorgesehene Maximalauslenkung ist durch eine Begrenzungseinrichtung 130 vorgegeben.

Die Begrenzungseinrichtung 130 umfasst zwei Gewindestangen 131, welche jedenfalls in ihren Endbereichen Gewinde aufweisen und welche durch radiale Erstreckungen 113, 123 der Befestigungsmittel 110, 120 hindurchgeführt sind. Von den Gewindestangen 131 ist eine oberhalb des Rohres 1 und die andere unterhalb des Rohres 1 angeordnet (in der Darstellung der Figur 1; "oberhalb" und "unterhalb" sind darum nicht auf eine Lage bezüglich der Gravitationsrichtung beschränkt) und dementsprechend sind auch die radialen Erstreckungen 113, 123 angeordnet. An den Endbereichen der Stangen 131 sind jeweils Muttern 132 angeordnet, welche einen Anschlag bilden und deren Position mithin die maximale Verschiebung des Rohres 1 bezüglich der Muffe 2 begrenzt.

Die Vorrichtung 100 umfasst ferner eine Messeinrichtung 140 in Form eines Linearpotentiometers, welches seinerseits einen Schaft 141 und eine Hülse 142 aufweist. Der Schaft 141 ist mit seinem Ende an der radialen Erstreckung 113 des Befestigungsmittels 110 befestigt, beispielweise mittels einer Schraubverbindung. Die Hülse 142 ist mit ihrem Ende an der radialen Erstreckung 123 des Befestigungsmittels 120 befestigt, beispielsweise mittels einer Schraubverbindung.

Wenn es zu einer axialen Verschiebung des Rohres 1 bezüglich der Muffe 2 kommt, werden zugleich die beiden Komponenten 141, 142 der Messeinrichtung 140 gegeneinander bewegt und die veränderte Stellung des Schafts 141 bezüglich der Hülse 142 resultiert in einem anderen Ausgangssignal, welches von der Messeinrichtung ausgegeben wird und welches mit der axialen Verschiebung des Rohres bezüglich der Muffe 2 korreliert.

In diesem Ausführungsbeispiel ist das zweite Befestigungsmittel 120 an der Muffe 2 befestigt. Es ist jedoch auch möglich, das zweite Befestigungsmittel 120 an einem Rohr zu befestigten, welches in die dem Rohr 1 abgewandte Öffnung der Muffe 2 eingeschoben ist. Bei dem Rohr 1 kann es sich um ein Rohrstück handeln, welches im Vergleich zu einem bei der Verlegung einer Rohrleitung verwendeten Rohren eine geringere Länge hat und welches zusammen mit der Muffe 2 und der Vorrichtung 100 zwischen zwei Rohre einer Rohrleitung eingebaut wird. In diesem Fall befindet sich an dem der Muffe 2 abgewandten Ende des Rohrstücks 1 eine weitere Muffe zur Herstellung der Verbindung mit dem angrenzenden Rohr der Rohrleitung, während der Endabschnitt eines weiteres Rohrs der Rohrleitung in die dem Rohrstück 1 abgewandte Öffnung der Muffe 2 eingeschoben wird. Bei diesem Vorgehen kann die Kombination aus dem Rohrstück 1, der Muffe 2 und der Vorrichtung 100 als Bausatz verwendet werden, um eine Leitungsüberwachung in eine Rohrleitung an der dafür vorgesehenen Stelle zu integrieren. Diese Kombination kann als Bausatz vertrieben und transportiert werden.

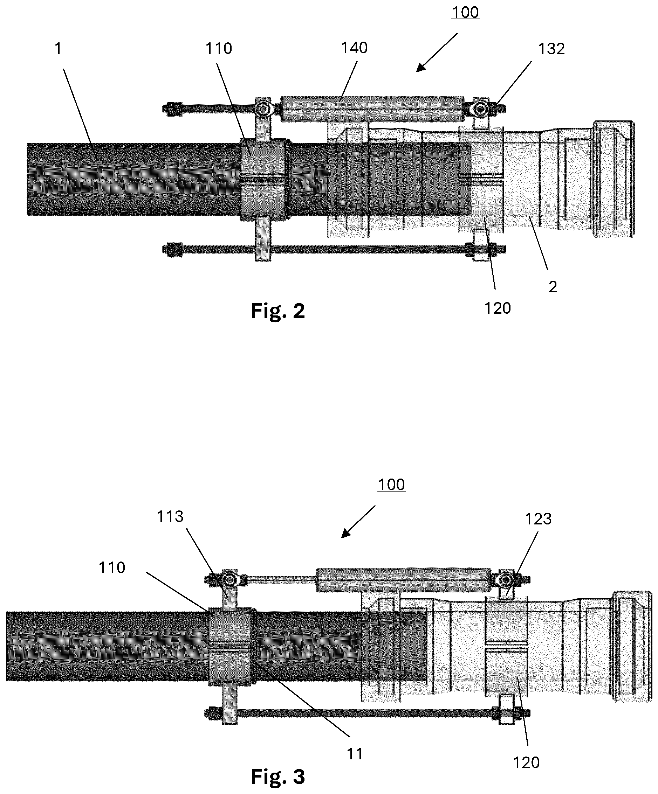

Fig. 2 zeigt eine Seitenansicht des ersten Ausführungsbeispiels der erfindungsgemässen Vorrichtung in einem ersten Zustand, in welchem das Rohr 1 weit in die Muffe 2 hineingeschoben ist und dementsprechend der Schaft 141 der als Linearpotentiometer ausgebildeten Messeinrichtung 140 weit in die Hülse 142 hineingeschoben ist, denn das Befestigungsmittel 110 bewegt sich zusammen mit dem Rohr 1.

Fig.3 zeigt eine Seitenansicht des ersten Ausführungsbeispiels der erfindungsgemässen Vorrichtung in einem zweiten Zustand, in welchem das Rohr 1 weit aus der Muffe 2 herausgeschoben ist, wobei die radialen Erstreckungen 113, 123 an den Anschläge bildenden Muttern 132 anliegen, sodass eine weitere axiale Verschiebung, welche das Rohr 1 und die Muffe 2 voneinander entfernt, nicht möglich ist. Um zu verhindern, dass, wenn die auf eine Entfernung des Rohrs 1 von der Muffe 2 hinwirkende Kraft nicht nachlässt, sich das erste Befestigungsmittel 110 auf der Oberfläche des Rohres 1 unter Überwindung der Haftreibungskraft entlang bewegt, liegt das erste Befestigungsmittel 110 an einer Schweissraupe 11 an, sodass das erste Befestigungsmittel 110 an dem Rohr 1 insoweit nicht nur durch einen Kraftschluss in Form eines Reibschlusses befestigt ist, sondern zusätzlich durch einen Formschluss zwischen dem Befestigungsmittel 110 und der Schweissraupe 11.

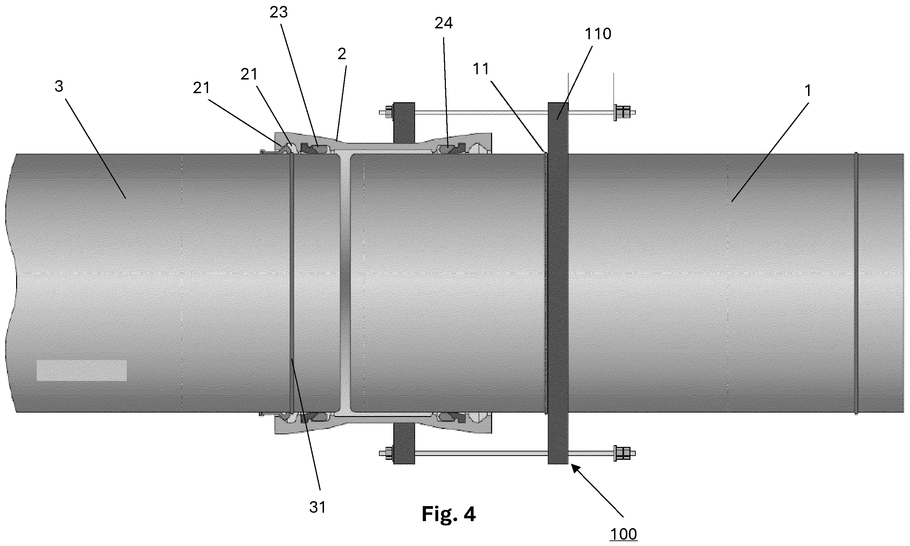

Fig. 4 zeigt eine teilweise geschnittene Seitenansicht des ersten Ausführungsbeispiels, wobei in dieser Ansicht die Muffe 2 in einem Längsschnitt dargestellt ist, um die zu zeigen, wie ein Rohr 3 mit der Muffe 2 verbunden wird. Das Rohr 3 weist wiederum in seinem Endbereich eine Schweissraupe 31 an seiner Aussenumfangsfläche auf. Die Muffe 2 erstreckt sich über diese Schweissraupe 31 hinaus und ein Riegel 21 ist in einer Nut 22 der Muffe 2 angeordnet, welcher zum einen an der Schweissraupe 31 anliegt und zum anderen sich in radialer Richtung in die Nut 22 erstreckt. Bewegt sich das Rohr 3 von der Muffe 2 weg, wird der Riegel 21 von der Schweissraupe in der Nut 22 in Axialrichtung verschoben, bis er an der Innenfläche der Nut 22 anliegt und dann eine weitere Bewegung des Rohres 3 von der Muffe 2 weg blockiert. Um den Riegel 21 in diese Position zu bringen, weist die Nut 22 an ihrer Stirnseite (senkrecht zur Bildebene der Fig. 4, nicht dargestellt) eine Ausnehmung auf, in welche der Riegel 21 hineingesteckt und sodann entlang der Umfangsrichtung des Rohres 3 in die Nut 22 geschoben wird. Auf diese Weise können nacheinander mehrere Riegel 21 in die Nut 22 geschoben werden, sodass schliesslich über den Umfang verteilt Riegel 21 in der Nut 22 angeordnet sind. Bei einer solchen RohrMuffe-Verbindung hat das Rohr 3 ein gewisses Spiel in der Muffe und kann in Axialrichtung verschoben sowie abgewinkelt werden. Ein Dichtring 23, der in einer entsprechenden Nut der Muffe 2 angeordnet ist, stellt sicher, dass es dabei nicht zu Undichtheiten kommt. Ein entsprechender Dichtring 24 ist ebenfalls zwischen dem Rohr 1 und der Muffe 2 in einer dafür vorgesehenen Nut der Muffe 2 angeordnet, sodass das Rohrstück 1 gegenüber der Muffe verschoben werden kann, ohne dass es zu Undichtheiten kommt. Das Befestigungsmittel 110 liegt an der Schweissraue 11 des Rohrs 1 an.

Hinsichtlich der Verbindung zwischen dem Rohr 1 und der Muffe 2 wird auf die zum Stand der Technik gehörenden Rohrverbindungssysteme der Firma "Duktus - VonRoll Hydro" verwiesen, insbesondere die BLS- und BRS-Verbindungssysteme.

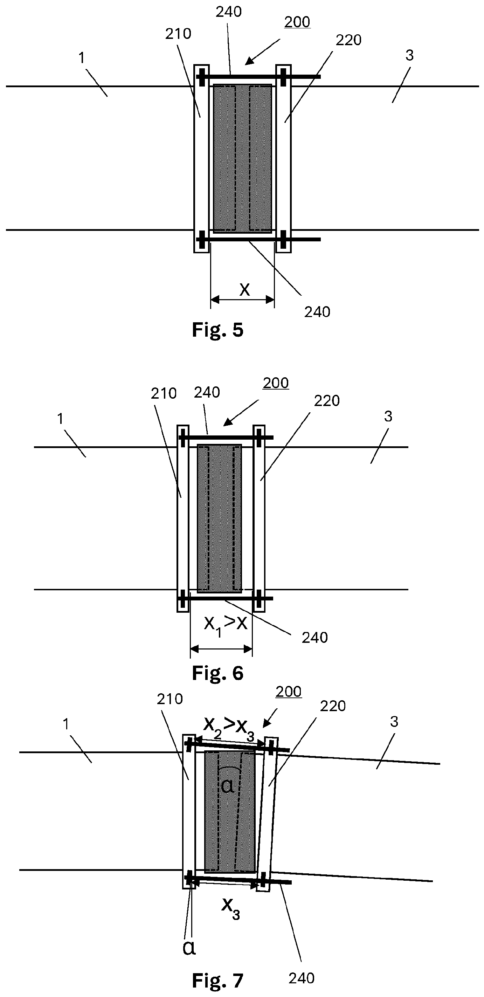

Fig. 5 zeigt eine schematische Ansicht eines zweiten Ausführungsbeispiels der erfindungsgemässen Vorrichtung in einem ersten Zustand, der bezüglich der Figuren 6 und 7 als Ausgangszustand gelten soll und in welchem es noch nicht zu einer Lageänderung des ersten Rohres 1 gegenüber dem zweiten Rohr 3 gekommen ist. Beide Rohre 1, 3 sind wie bei dem ersten Ausführungsbeispiel in eine Muffe 2 gesteckt. Eine Vorrichtung 200 zum Messen einer Lageänderung des ersten Rohres 1 gegenüber dem zweiten Rohr 3 ist an beiden Rohren 1, 3 über jeweilige Befestigungsmittel 210 und 220, die wie bei dem ersten Ausführungsbeispiel als Rohrklemmschellen ausgebildet sind, befestigt, nur dass bei diesem Ausführungsbeispiel das Befestigungsmittel 220 an dem Rohr 3 und nicht an der Muffe 2 befestigt ist. Das Befestigungsmittel 220 könnte jedoch auch an der Muffe 2 befestigt werden.

In der schematischen Darstellung der Figuren 5 bis 7 sind zwischen dem ersten Befestigungsmittel 210 und dem zweiten Befestigungsmittel 220 jeweils zwei Messvorrichtungen 240 angeordnet. Beide Messvorrichtungen 240, bei welchen es sich um Linearpotentiometer handeln kann, zusammen bilden die Messeinrichtung und haben in der Fig. 5 dieselbe Auslenkung X, d.h. dass der Abstand zwischen dem ersten und dem zweiten Befestigungsmittel 210, 220 gleich ist und X beträgt. In dem Zustand, der in Fig. 6 gezeigt ist, wurde der Abstand zwischen den beiden Rohren 1, 3 erhöht, d.h. eines der beiden Rohre 1,3 oder beide Rohre 1,3 wurden durch das Wirken von Kräften im Untergrund ein Stück aus der Muffe 2 herausgezogen, sodass der Abstand der Befestigungsmittel 210, 220 nun X₁>X beträgt, welcher von den Messvorrichtungen 240 gemessen wird. Dabei handelt es sich um eine axiale Verschiebung. In dem in Fig. 7 gezeigten Zustand ist das Rohr 3 gegenüber dem Rohr 1 um einen Winkel α abgewinkelt, sodass der Abstand zwischen dem ersten und zweiten Befestigungsmittel an den Positionen der Messvorrichtungen 240 nicht gleich ist, sodass die Auslenkung der beiden Messvorrichtungen X₂, X₃ verschieden ist und insbesondere X₂>X₃ ist. Aus der Differenz der Auslenkungen X₂, X₃ kann die Abwinkelung der beiden Rohre 1, 3 (oder zwischen einem Rohr und einer Muffe, sollten die Befestigungsmittel an dem Rohr und der Muffe befestigt sein) bestimmt werden. Um auch eine Abwinklung erfassen zu können, sind die Messvorrichtungen 240 schwenkbar an den Befestigungsmitteln 210, 220 angeordnet. Bei der Zeichnungsebene der Figuren 5 bis 7 kann es sich um eine horizontale Ebene und also um eine seitliche Auslenkung (Abwinkelung) der beiden Rohre 1, 3 oder um eine vertikale Ebene handeln. Wie bereits zuvor erwähnt, können mehr als zwei Messvorrichtungen so an den Befestigungsmitteln 210, 220 angeordnet sein, dass nicht nur die axiale Verschiebung zwischen den Rohren 1, 3 bzw. einem Rohr und einer Muffe erfasst werden kann, sondern auch Abwinkelungen insbesondere in zwei zueinander senkrechten Richtungen, bevorzugt in einer horizontalen Richtung und einer vertikalen Richtung, detektiert werden.

## Patentansprüche

1. Vorrichtung (100) zum Messen einer Lageänderung eines ersten Rohres oder Rohrstücks (1) gegenüber einem mit diesem über eine Muffe (2) verbundenen zweiten Rohr oder Rohrstück (3), **gekennzeichnet durch**
- zumindest zwei Befestigungsmittel (110, 120), von denen ein erstes Befestigungsmittel (110) an dem ersten Rohr oder Rohrstück (1) oder an der Muffe (2) befestigbar ist und ein zweites Befestigungsmittel (120) an dem zweiten Rohr oder Rohrstück (3) oder an der Muffe (2) befestigbar ist,
- eine Messeinrichtung (140), die ausgebildet ist, einen axialen Abstand, eine axiale Verschiebung, einen Winkel und/oder eine Winkeländerung des ersten Befestigungsmittels (110) bezüglich dem zweiten Befestigungsmittel (120) zu messen und ein entsprechendes Ausgangsignal zu erzeugen, wobei die Messeinrichtung an dem ersten Befestigungsmittel (110) und dem zweiten Befestigungsmittel (120) angeordnet ist.

2. Vorrichtung (100) nach Anspruch 1, ferner umfassend
- eine Begrenzungseinrichtung (130), über welche das erste Befestigungsmittel (110) und das zweite Befestigungsmittel (120) gegeneinander beweglich miteinander verbunden sind, wobei die Begrenzungseinrichtung (130) ein Rückhalteelement, insbesondere in Form eines Anschlags, aufweist, um eine maximale Lageänderung des ersten Befestigungsmittels (110) gegenüber dem zweiten Befestigungsmittel (120) zu begrenzen.

3. Vorrichtung (100) nach Anspruch 1 oder 2, wobei das erste Befestigungsmittel (110) und/oder das zweite Befestigungsmittel (120) derart ausgebildet sind, dass sie das erste Rohr oder Rohrstück (1), das zweite Rohr oder Rohrstück (3) oder die Muffe ringförmig umschliessen, insbesondere als Rohrklemmschelle ausgebildet sind.

4. Vorrichtung (100) nach Anspruch 1, 2 oder 3, wobei das erste Befestigungsmittel (110) und das zweite Befestigungsmittel (120) radiale Erstreckungen (113, 123) aufweisen, an denen die Messeinrichtung (140) und/oder die Begrenzungseinrichtung (130) angeordnet ist.

5. Vorrichtung (100) nach einem der vorhergehenden Ansprüche, wobei die Messeinrichtung (140) ein oder mehrere Potentiometer, insbesondere Linearpotentiometer, mit gegeneinander verstellbaren Komponenten umfasst, wobei eine dieser Komponenten an dem ersten Befestigungsmittel (110) und eine andere an dem zweiten Befestigungsmittel (120) angeordnet ist.

6. Vorrichtung (100) nach Anspruch 5, wobei das Linearpotentiometer ineinander verschiebbare Komponenten aufweist, von denen eine als Schaft (141) und die andere als den Schaft (141) aufnehmende Hülse (142) ausgebildet ist.

7. Vorrichtung (100) nach einem der vorhergehenden Ansprüche, wobei die Begrenzungseinrichtung (130) ein oder mehrere, insbesondere zwei, Führungselemente umfasst, die gleitend mit zumindest dem ersten oder dem zweiten Befestigungsmittel (110, 120) verbunden sind, sodass eine Lageänderung des ersten Befestigungsmittels (110) gegenüber dem zweiten Befestigungsmittel (120) entlang der Führungselemente erfolgt.

8. Vorrichtung nach Anspruch 7, wobei das eine oder die mehreren Führungselemente als Führungsstangen (131), insbesondere Gewindestangen, ausgebildet sind, welche sich durch die radialen Erstreckungen (113, 123) des ersten und/oder zweiten Befestigungsmittels ()110, 120 hindurch erstrecken.

9. Rohrverbindungssystem, umfassend
- ein erstes Rohr oder Rohrstück (1),
- ein zweites Rohr oder Rohrstück (3),
- eine Muffe (2) zur Verbindung des ersten Rohrs oder Rohrstücks (1) und des zweiten Rohrs oder Rohrstücks (3) sowie
- eine Vorrichtung (100) nach einem der vorhergehenden Ansprüche,
wobei das erste Rohr oder Rohrstück (1) und/oder das zweite Rohr oder Rohrstück (3) eine Schweissraupe (11, 31) aufweist, welche sich zumindest abschnittsweise entlang eines Umfangs erstreckt, oder an dem ersten Rohr oder Rohrstück (1) und/oder dem zweiten Rohr oder Rohrstück (3) ein Klemmring angeordnet ist,
wobei die Muffe (2) mit einer Schweissraupe (11, 31) oder einem Klemmring zusammenwirkt, um einem Lösen des ersten Rohrs oder Rohrstücks (1) von dem zweiten Rohr oder Rohrstück (3) entgegenzuwirken,
und wobei das erste und/oder zweite Befestigungsmittel (110, 120) an einer Schweissraupe (11, 31) oder einem Klemmring angeordnet sind.

10. Rohrverbindungssystem nach Anspruch 9, wobei die Muffe (2) eine Schweissraupe (11, 31) oder einen Klemmring an dem ersten Rohr oder Rohrstück (1) und/oder dem zweiten Rohr oder Rohrstück (3) hintergreift und zwischen der Muffe (2) und der Schweissraupe (11, 31) oder dem Klemmring zumindest ein Riegel (21) angeordnet ist.

11. Rohrverbindungssystem nach Anspruch 10, wobei zwischen der Muffe (2) und der Schweissraupe (11, 31) oder dem Klemmring ein oder mehrere sich in Umfangsrichtung erstreckende Riegel (21) angeordnet sind.

12. Verwendung einer Vorrichtung (100) nach einem der Ansprüche 1 bis 8 oder eines Rohrverbindungssystems nach einem der Ansprüche 9 bis 11 zur Überwachung einer Rohrleitung, insbesondere unterirdischen Rohrleitung.

13. Verfahren zur Leitungsüberwachung, wobei eine Rohrleitung aus mehreren Rohren verlegt ist, insbesondere über einen Hang verlegt ist, an welcher zumindest eine Vorrichtung (100) nach einem der Ansprüche 1 bis 8 angeordnet ist oder die Verbindung zwischen zumindest zwei Rohren durch ein Rohrverbindungssystem nach einem der Ansprüche 9 bis 12 hergestellt ist, und wobei das Ausgangssignal der Messeinrichtung kontinuierlich oder intermittierend in einer Zeitreihe erfasst wird.
